# EUROPÄISCHE PATENTSCHRIFT

(11) **EP 3 566 890 B1**
(45) Veröffentlichungstag und Bekanntmachung des Hinweises auf die Patenterteilung: **24.02.2021**
(21) Anmeldenummer: 19169420.7
(22) Anmeldetag: 16.04.2019
(51) Int. Cl.: B60H 1/24, B60N 3/04

(54) **BELÜFTUNGSSYSTEM FÜR EINEN INNENRAUM EINES FAHRZEUGES**
VENTILATION SYSTEM FOR AN INTERIOR OF A VEHICLE
SYSTÈME DE VENTILATION POUR UN HABITACLE D'UN VEHICULE

(30) Priorität: 09.05.2018 DE 102018207292
(43) Veröffentlichungstag der Anmeldung: 13.11.2019
(73) Patentinhaber: VOLKSWAGEN AKTIENGESELLSCHAFT, 38440 Wolfsburg (DE)
(72) Erfinder: Müller-Zischkale, Dirk, 38440 Wolfsburg (DE); Paschke, Jennifer, 38442 Wolfsburg (DE)

(56) Entgegenhaltungen:
- EP-A2- 0 247 677
- JP-A- 2008 030 696
- US-A- 2 849 941
- US-A1- 2010 272 944

## Beschreibung

Die Erfindung betrifft ein Belüftungssystem für einen Innerraum eines Fahrzeuges nach dem Oberbegriff des unabhängigen Vorrichtungsanspruches.

Für die Erreichung von hohen ergonomischen und optischen Ansprüchen bei gleichzeitig guter Innenraumbelüftung in Kraftfahrzeugen ist es manchmal erforderlich, die Luftausströmer der Belüftungssysteme in Fahrzeugen auf das Fußbodenniveau der Fahrzeuge zu legen. Hierbei kann es jedoch dazu kommen, dass unter den Füßen befindliche Schmutzpartikel, beispielsweise kleine Steinchen, bei den Fahrzeugbewegungen in den Luftausströmer gelangen und dort unangenehme Geräusche erzeugen können. Zurzeit werden Gitter oder Blenden im Eingangsbereich der Luftausströmer eingesetzt, um relativ grobe Schmutzpartikel herauszufiltern, die zur Geräuschentwicklung in den Luftkanälen der Luftausströmer führen können. Solche Gitter oder Blenden können jedoch den Querschnitt der Luftkanäle einschränken und zu Beeinträchtigung der Funktion der Belüftungssysteme führen.

Aus der DE 10 2015 221 769 A1 ist eine Düse zum Ein- oder Ausströmen von Luft eines im Boden eines Kraftfahrzeugs angeordneten Lüftungskanals bekannt, wobei die Düse eine im Boden angeordnete Schale, die mit einem lösbaren Deckel abgedeckt ist, aufweist.

Weiteren Stand der Technik zeigen die Druckschriften DE 197 20 384 C1, DE 199 36 881 A1, DE 197 42 566 C1, US 2 849 941 A und JP 2008 030 696 A.

Die Aufgabe der Erfindung ist es, mindestens einen aus dem Stand der Technik bekannten Nachteil bei einem Belüftungssystem zumindest teilweise zu überwinden. Insbesondere ist es Aufgabe der Erfindung, ein verbessertes Belüftungssystem für einen Innerraum eines Fahrzeuges bereitzustellen, welches einfach und kostengünstig sowohl in der Herstellung als auch bei der Montage ist, welches ein Gelangen von Schmutzpartikeln, insbesondere von kleinen Steinchen, aus dem Fußraum bzw. Fußbodenbereich des Fahrzeuges in den Luftausströmer und ein Entstehen von unangenehmen Geräuschen dort zumindest reduziert und vorzugsweise verhindert.

Die erfindungsgemäße Aufgabe wird durch ein Belüftungssystem für einen Innenraum eines Fahrzeuges mit den Merkmalen des unabhängigen Vorrichtungsanspruches 1 gelöst. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bezüglich der Offenbarung zu den Erfindungsaspekten der Erfindung stets wechselseitig Bezug genommen wird bzw. werden kann.

Die Erfindung stellt ein Belüftungssystem für einen Innerraum eines Fahrzeuges bereit, welches mit einem Luftausströmer zum Abführen einer Luft aus dem Innerraum des Fahrzeuges nach außen ausgebildet ist, wobei der Luftausströmer einen Luftkanal nach außen aufweist, und wobei der Luftkanal einen Eingangsbereich auf dem Fußbodenniveau im Innerraum des Fahrzeuges aufweist. Dabei ist es vorgesehen, dass im Eingangsbereich des Luftkanals eine Auffangstruktur ausgebildet ist, um Schmutzpartikel aus dem Fußbodenbereich des Fahrzeuges abzufangen, bevor sie in den Luftkanal gelangen. Erfindungsgemäß ist es vorgesehen, dass die Auffangstruktur in einem Bodenbelag des Fahrzeuges ausgebildet ist, und/oder dass die Auffangstruktur in einem Bodenblech des Fahrzeuges integriert ist. Erfindungsgemäß weist die Auffangstruktur mindestens eine Rille auf, die im Wesentlichen quer zum Eingangsbereich des Luftkanals ausgerichtet ist.

Das erfindungsgemäße Belüftungssystem eignet sich zur Anwendung in Fahrzeugen aller Art, insbesondere in Kraftfahrzeugen. Das Belüftungssystem kann auf eine vorteilhafte Weise dort eingesetzt werden, wo sich mehr oder weniger grobe Schmutzpartikel ansammeln können, die beim Klappern im Luftkanal zu unangenehmen Geräuschen führen können. Im Fußbodenbereich eines Fahrzeuges, wo sich der grobe Schmutz tendenziell ansammelt, kann daher das erfindungsgemäße Belüftungssystem auf eine besonders vorteilhafte Weise eingesetzt werden.

Der Erfindungsgedanke liegt dabei darin, dass im Bereich zwischen dem Luftausströmer und der Schmutzquelle (beispielsweise ein Fahrer- oder Beifahrerfuß) eine bzw. mehrere definierte Nuten bzw. Rillen in den Bodenbelag bzw. in den Fußboden oder direkt in das Bodenblech des Fahrzeuges eingebracht werden, die eine Auffangstruktur für die Schmutzpartikel bilden. Die Auffangstruktur bzw. die Rillen der Auffangstruktur können beispielsweise zu einem geringen Teil von einer Einlegematte abgedeckt werden, um ein Herausrutschen von Schmutzpartikeln aus der Auffangstruktur in Richtung des Fußbodens zu verhindern. Weiterhin kann mindestens eine Rippe im Rahmen der Auffangstruktur vorgesehen sein, die sich in den Eingangsbereich des Luftkanals lamellenartig erstreckt, um ein Herausrutschen von Schmutzpartikeln aus der Auffangstruktur in Richtung des Luftkanals zu verhindern. Eventuell auftretender Schmutz bzw. Steinchen fallen somit in die Auffangstruktur, bleiben dort liegen und können bei der Fahrzeugreinigung problemlos abgesaugt werden. Somit kann die Erfindung ein verbessertes Belüftungssystem bereitstellen, welches den Querschnitt des Luftkanals nicht unnötig beschränkt und welches auf eine einfache und zuverlässige Weise ein Gelangen von Schmutzpartikeln unterschiedlicher Arten, insbesondere von größeren Schmutzpartikeln, beispielsweise Steinchen, in den Luftkanal des Luftausströmers verhindert. Etwaige unangenehme Geräusche, die im Luftkanal durch Klappern von Schmutzpartikeln entstehen können, können mithilfe der Erfindung reduziert bis gar vermieden werden.

Wenn die Auffangstruktur in einem Bodenbelag des Fahrzeuges ausgebildet ist, kann der Rohbau bzw. das Bodenblech des Fahrzeuges unverändert gelassen werden. Der Bodenbelag kann speziell für das Belüftungssystem ausgebildet sein. Mithilfe des Bodenbelags kann die erfindungsgemäße Auffangstruktur auf eine einfache und kostengünstige Weise realisiert werden.

Wenn die Auffangstruktur in einem Bodenblech des Fahrzeuges integriert ist, kann die Anzahl der Bauteile beim Realisieren des erfindungsgemäßen Belüftungssystems reduziert werden.

Des Weiteren sieht die Erfindung bei einem Belüftungssystem vor, dass die Auffangstruktur mindesten eine Rille oder Nut aufweist, die im Wesentlichen quer zum Eingangsbereich des Luftkanals ausgerichtet ist. Die Rille kann bewirken, dass Schmutzpartikel darein fallen können und dort verbleiben können, bevor sie bei der Fahrzeugreinigung problemlos abgesaugt werden.

Zudem kann die Erfindung bei einem Belüftungssystem vorsehen, dass die Rille einen Hinterschnitt aufweist, um ein Herausspringen von Schmutzpartikeln aus der Auffangstruktur zu verhindern. Der Hinterschnitt kann eine relativ steile Wandung am Übergang zum Eingangsbereich des Luftkanals aufweisen oder eine Wandung, die zum Teil unter den Eingangsbereich des Luftkanals hintergreift. Somit kann auf eine einfache geometrische Weise verhindert werden, dass die Schmutzpartikel die Auffangstruktur überwinden und in Richtung zum Luftkanal die Auffangstruktur verlassen können. Aber auch am Übergang zum Fußbodenbereich des Fahrzeuges kann der Hinterschnitt eine Wandung aufweisen, die zum Teil unter den Fußbodenbereich des Fahrzeuges hintergreift. Dadurch kann verhindert werden, dass die Schmutzpartikel die Auffangstruktur in Richtung zum Fußbodenbereich verlassen. Der Hinterschnitt kann im Querschnitt des Luftkanals gesehen eine Teilkreisform, vorzugsweise eine Tröpfchenform oder eine sich nach unten erweiternde Trapezform aufweisen.

Außerdem kann die Erfindung bei einem Belüftungssystem vorsehen, dass die Rille eine Einfangtiefe aufweist, um ein Einfangen von Schmutzpartikeln innerhalb der Auffangstruktur zu begünstigen. Je tiefer die Rille ist, desto unwahrscheinlicher ist ein Herausspringen von Schmutzpartikeln aus der Auffangstruktur. Allerdings kann der Bauraum im Fahrzeug nach unten begrenzt sein. Um eine geeignete Einfangtiefe zu ermöglichen, kann die Erfindung vorsehen, dass die Tiefe der Rille größer oder gleich einer typischen Tiefe eines Schuhprofils eines Benutzers ausgewählt wird, der eine Schuhgröße beispielsweise bis 47, insbesondere bis 49 aufweist. Die Tiefe eines Schuhprofils bestimmt im Wesentlichen die Größe der Schmutzpartikel, die in den Fußraum des Fahrzeuges gelangen können. Somit kann auf eine vorteilhafte Weise eine geeignete Tiefe der Rille eingestellt werden.

Ferner kann die Erfindung vorsehen, dass eine Einlegematte vorgesehen ist, die eine zumindest teilweise herstellbare Abschirmung für die Auffangstruktur von der Seite des Fußbodenbereichs des Fahrzeuges bildet, um ein Herausrutschen von Schmutzpartikeln auf den Fußbodenbereich des Fahrzeuges zu verhindern. Von der Seite des Fußbodenbereichs kann mit anderen Worten eine Einlegematte die Auffangstruktur zu einem kleinen Teil überdecken, der beispielsweise 5% bis 20% der gesamten Breite der Auffangstruktur betragen kann. Somit kann eine Abschirmung geschaffen werden, die ein Hineinfallen der Schmutzpartikel in die Auffangstruktur nicht verhindert, und die jedoch ein Zurückprallen der in der Auffangstruktur bereits befindlichen Schmutzpartikel bewirkt, wenn diese aufgrund von Fahrzeugerschütterungen dazu tendieren, die Auffangstruktur in Richtung des Fußbodenbereiches zu verlassen. Somit kann eine elegante Lösung bereitgestellt werden, um die Schmutzpartikel in der Auffangstruktur einzufangen. Im Zusammenspiel mit einem Hinterschnitt an mindestens einer Rille der Auffangstruktur kann eine besonders zuverlässige Auffangstruktur geschaffen werden.

Weiterhin kann die Erfindung bei einem Belüftungssystem vorsehen, dass die Auffangstruktur mindestens eine Rippe am Eingangsbereich des Luftkanals aufweist, die zumindest zum Teil in den Eingangsbereich des Luftkanals eingreift, um ein Abprallen von Schmutzpartikeln weg vom Luftkanal und insbesondere in Richtung der Auffangstruktur zu bewirken. Dabei ist es denkbar, dass die Rippe lamellenartig bzw. kammzahnartig ausgebildet ist. Eine solche Rippe kann sich im Querschnitt des Eingangsbereiches des Luftkanals erstrecken bzw. quer zum Eingangsbereich des Luftkanals ausgebildet sein. Die Rippe kann mit anderen Worten im Querschnitt des Eingangsbereiches des Luftkanals gesehen einen Teilsektor überdecken. Die Rippe kann ein Abprallen von Schmutzpartikeln in Richtung der Auffangstruktur bewirken, bevor sie in den Luftkanal gelangen können, ohne jedoch den Querschnitt des Luftkanals unnötig zu überdecken. Zudem kann die Rippe ein gewisses Herauskämen von faserigen Schmutzpartikeln bewirken, bevor sie ebenfalls in den Luftkanal gelangen.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigen:
- Fig. 1: eine schematische Darstellung eines bekannten Belüftungssystems auf dem Niveau eines Fußbodenbereiches im Fahrzeuginnenraum,
- Fig. 2: eine schematische Darstellung eines erfindungsgemäßen Belüftungssystems, und
- Fig. 3: eine schematische Darstellung eines weiteren möglichen Belüftungssystems im Rahmen der Erfindung.

In den nachfolgenden Figuren werden für die gleichen technischen Merkmale auch von unterschiedlichen Ausführungsbeispielen die identischen Bezugszeichen verwendet.

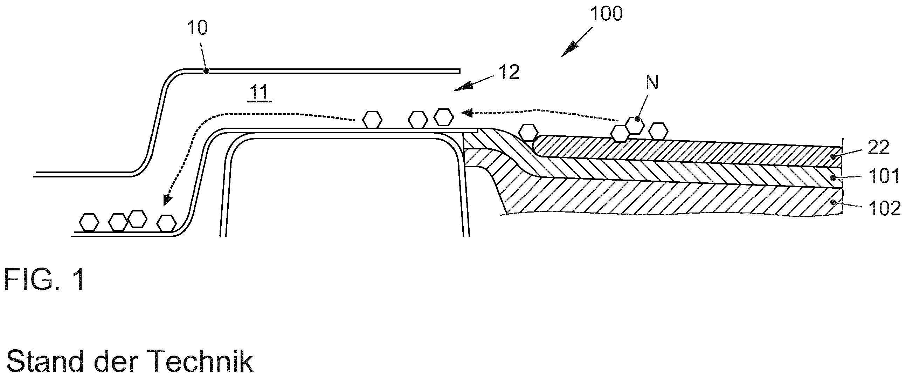

Die Figur 1 zeigt ein bekanntes Belüftungssystem 100, bei dem sich die Schmutzartikel N, beispielsweise kleine Steinchen, in einem Luftkanal 11 eines Luftausströmers 10 einfangen können. Im Luftkanal 11 können die Schmutzartikel N unangenehme Klappergeräusche verursachen.

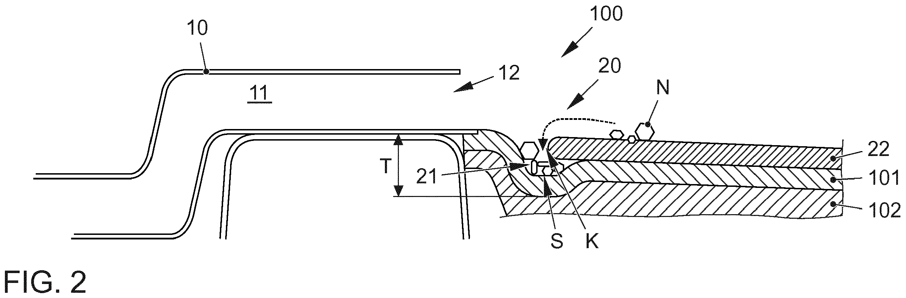

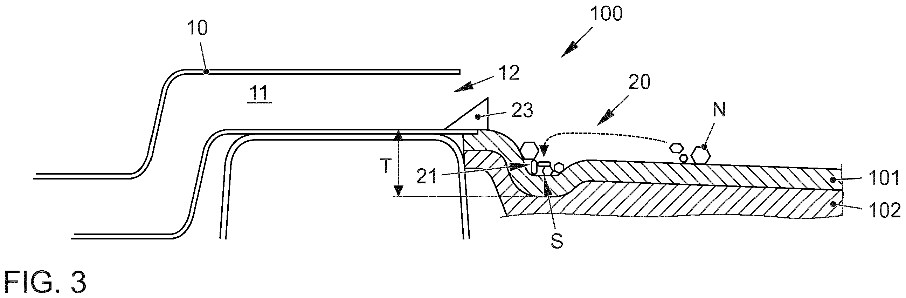

Die Figuren 2 und 3 zeigen vorteilhafte Ausführungsbeispiele eines verbesserten Belüftungssystems 100 im Sinne der Erfindung, das die Geräuschproblematik zumindest reduziert und vorzugsweise überwindet. Das erfindungsgemäße Belüftungssystem 100 ist für einen Innerraum eines Fahrzeuges, insbesondere für einen Fußraum bzw. Fußbodenbereich des Fahrzeuges, geeignet.

Das Belüftungssystem 100 weist einen Luftausströmer 10 zum Abführen einer Luft aus dem Innerraum des Fahrzeuges (vorzugsweise eines Kraftfahrzeuges) nach außen auf. Der Luftausströmer 10 weist in seinem Inneren einen Luftkanal 11, der vom Innerraum des Fahrzeuges nach außen in die Umgebung führt. Der Luftkanal 11 hat wiederum einen Eingangsbereich 12 für die abzutransportierende Luft auf dem Fußbodenniveau im Innerraum des Fahrzeuges. Im Eingangsbereich 12 des Luftkanals 11 sieht die Erfindung eine Auffangstruktur 20 vor, um Schmutzpartikel N aus dem Fußbodenbereich des Fahrzeuges abzufangen, bevor sie in den Luftkanal 11 gelangen können.

Die Auffangstruktur 20 im Sinne der Erfindung ist im Bereich zwischen dem Luftausströmer 10 und der Schmutzquelle, beispielsweise dem Fahrer- oder Beifahrerfuß angeordnet. Dieser Bereich geht in den Eingangsbereich 12 des Luftkanals 11 über. Die Auffangstruktur 20 umfasst mindestens eine Rille 21 (oder mehrere nicht dargestellte Rillen). Die Rille 21 kann in einem Bodenbelag 101 oder direkt im Bodenblech 102 des Fahrzeuges ausgebildet sein.

Wie es in der Figur 2 zu erkennen ist, kann die Auffangstruktur 20 zu einem bestimmten, wenn auch geringen Teil, beispielsweise 5% bis 20%, von einer Einlegematte 22 abgedeckt sein, um ein Herausrutschen von Schmutzpartikeln N aus der Auffangstruktur 20 in Richtung des Fußbodens 102 zu verhindern. Die Einlegematte 22 kann dabei eine Art Abschirmung K bilden, die von der Seite des Fußbodenbereichs die Auffangstruktur 20 zum Teil überdeckt. Eine solche Abschirmung K verhindert nicht ein Hineinfallen der Schmutzpartikel N in die Auffangstruktur 20, stellt jedoch sicher, dass die Schmutzpartikel N die Auffangstruktur 20 in Richtung des Fußbodenbereiches nicht verlassen können.

Wie es weiterhin die Figuren 2 und 3 zeigen, kann die Rille 21 einen Hinterschnitt S aufweisen, um ein Herausspringen von Schmutzpartikeln N aus der Auffangstruktur 20 zu verhindern. Am Übergang zum Eingangsbereich 12 des Luftkanals 11 kann der Hinterschnitt S eine Wandung aufweisen, die zum Teil unter den Eingangsbereich 12 des Luftkanals 11 hintergreift. Am Übergang zum Fußbodenbereich des Fahrzeuges kann der Hinterschnitt S ebenfalls eine Wandung aufweisen, die zum Teil unter den Fußbodenbereich des Fahrzeuges hintergreift. Der Hinterschnitt S kann somit zumindest eine Teilkreisform, vorzugsweise eine Tröpfchenform bilden. Weitere Formen des Hinterschnitts S sind im Sinne der Erfindung ebenfalls denkbar.

Wie es außerdem die Figuren 2 und 3 zeigen, kann die Rille 21 eine Einfangtiefe T aufweisen, um ein Einfangen von Schmutzpartikeln N innerhalb der Auffangstruktur 20 zu begünstigen. Je tiefer die Rille 21 ist, desto sicherer werden die Schmutzpartikel N in der Auffangstruktur 20 eingefangen. Allerdings kann der Bauraum im Fahrzeug nach unten begrenzt sein. Um eine geeignete Einfangtiefe T einzustellen, kann die Erfindung die Tiefe T der Rille 21 größer oder gleich einer typischen Tiefe eines Schuhprofils eines Benutzers auswählen, der eine Schuhgröße beispielsweise bis 47, insbesondere bis 49 aufweist.

Des Weiteren zeigt die Figur 3, dass die Auffangstruktur 20 mindestens eine Rippe 23 aufweisen kann, die sich in den Eingangsbereich 12 des Luftkanals 11 erstreckt. Die Rippe 23 kann im Querschnitt des Eingangsbereiches 12 des Luftkanals 11 gesehen zumindest zum Teil in den Eingangsbereich 12 des Luftkanals 11 eingreifen und beispielsweise einen Teilsektor darin überdecken. Die Rippe 23 kann ein Abprallen von Schmutzpartikeln N in Richtung der Auffangstruktur 20 bewirken, bevor sie in den Luftkanal 11 gelangen können, ohne jedoch den Querschnitt des Luftkanals 11 unnötig zu überdecken.

Die voranstehende Beschreibung der Figuren beschreibt die vorliegende Erfindung ausschließlich im Rahmen von Beispielen.

### Bezugszeichenliste

- 100: Belüftungssystem

- 10: Luftausströmer
- 11: Luftkanal
- 12: Eingangsbereich

- 20: Auffangstruktur
- 21: Rille
- 22: Einlegematte
- 23: Rippe

- N: Schmutzpartikel
- K: Abschirmung
- S: Hinterschnitt der Rille
- T: Einfangtiefe der Rille

- 101: Bodenbelag
- 102: Fußboden

## Patentansprüche

1. Belüftungssystem (100) für einen Innerraum eines Fahrzeuges mit einem Luftausströmer (10) zum Abführen einer Luft aus dem Innerraum des Fahrzeuges nach außen,
wobei der Luftausströmer (10) einen Luftkanal (11) nach außen aufweist,
und wobei der Luftkanal (11) einen Eingangsbereich (12) auf dem Fußbodenniveau im Innerraum des Fahrzeuges aufweist,
wobei im Eingangsbereich (12) des Luftkanals (11) eine Auffangstruktur (20) ausgebildet ist, um Schmutzpartikel (N) aus dem Fußbodenbereich des Fahrzeuges abzufangen, bevor sie in den Luftkanal (11) gelangen,
**dadurch gekennzeichnet,**
**dass** die Auffangstruktur (20) mindestens eine Rille (21) aufweist, die im Wesentlichen quer zum Eingangsbereich (12) des Luftkanals (11) ausgerichtet ist, wobei die Auffangstruktur (20) in einem Bodenbelag (101) des Fahrzeuges ausgebildet ist und/oder
wobei die Auffangstruktur (20) in einem Bodenblech (102) des Fahrzeuges integriert ist.

2. Belüftungssystem (100) nach dem vorhergehenden Anspruch,
**dadurch gekennzeichnet,**
**dass** die Rille (21) einen Hinterschnitt (S) aufweist, um ein Herausspringen von Schmutzpartikeln (N) aus der Auffangstruktur (20) zu verhindern.

3. Belüftungssystem (100) nach einem der vorhergehenden Ansprüche,
**dadurch gekennzeichnet,**
**dass** die Rille (21) eine Einfangtiefe (T) aufweist, um ein Einfangen von Schmutzpartikeln (N) innerhalb der Auffangstruktur (20) zu begünstigen.

4. Belüftungssystem (100) nach einem der vorhergehenden Ansprüche,
**dadurch gekennzeichnet,**
**dass** eine Einlegematte (22) vorgesehen ist, die eine zumindest teilweise Abschirmung (K) für die Auffangstruktur (20) von der Seite des Fußbodenbereichs des Fahrzeuges bildet, um ein Herausrutschen von Schmutzpartikeln (N) auf den Fußboden des Fahrzeuges zu verhindern.

5. Belüftungssystem (100) nach einem der vorhergehenden Ansprüche,
**dadurch gekennzeichnet,**
**dass** die Auffangstruktur (20) mindestens eine Rippe (23) am Eingangsbereich (12) des Luftkanals (11) aufweist, die zumindest zum Teil in den Eingangsbereich (12) des Luftkanals (11) eingreift, um ein Abprallen von Schmutzpartikeln (N) weg vom Luftkanal (11) zu bewirken.

## Claims

1. Ventilation system (100) for an interior compartment of a vehicle
with an air vent (10) for the discharge of air from the interior compartment of the vehicle to the outside,
the air vent (10) having an air duct (11) to the outside, and the air duct (11) having an inlet region (12) at the floor level in the interior compartment of the vehicle, a collecting structure (20) being configured in the inlet region (12) of the air duct (11), in order to collect dirt particles (N) from the floor region of the vehicle before they pass into the air duct (11),
**characterized**
**in that** the collecting structure (20) has at least one groove (21) which is oriented substantially transversely with respect to the inlet region (12) of the air duct (11),
the collecting structure (20) being configured in a floor covering (101) of the vehicle and/or
the collecting structure (20) being integrated into a floor panel (102) of the vehicle.

2. Ventilation system (100) according to the preceding claim,
**characterized**
**in that** the groove (21) has an undercut (S), in order to prevent dirt particles (N) from jumping out of the collecting structure (20).

3. Ventilation system (100) according to either of the preceding claims,
**characterized**
**in that** the groove (21) has a capture depth (T), in order to promote capture of dirt particles (N) within the collecting structure (20).

4. Ventilation system (100) according to one of the preceding claims,
**characterized**
**in that** a fitted mat (22) is provided which forms an at least partial shielding means (K) for the collecting structure (20) from the side of the floor region of the vehicle, in order to prevent dirt particles (N) from sliding out onto the floor of the vehicle.

5. Ventilation system (100) according to one of the preceding claims,
**characterized**
**in that** the collecting structure (20) has at least one rib (23) at the inlet region (12) of the air duct (11), which rib (23) engages at least in part into the inlet region (12) of the air duct (11), in order to bring about rebounding of dirt particles (N) away from the air duct (11) .

## Revendications

1. Système de ventilation (100) pour un espace intérieur d'un véhicule,
muni d'un dispositif d'évacuation d'air (10) pour le transport d'un air de l'espace intérieur du véhicule vers l'extérieur,
le dispositif d'évacuation d'air (10) comprenant un canal d'air (11) vers l'extérieur,
et le canal d'air (11) comprenant une zone d'entrée (12) au niveau du plancher dans l'espace intérieur du véhicule,
une structure de collecte (20) étant formée dans la zone d'entrée (12) du canal d'air (11), afin de collecter des particules de salissure (N) à partir de la zone de plancher du véhicule avant qu'elles n'arrivent dans le canal d'air (11),
**caractérisé en ce que**
la structure de collecte (20) comprend au moins une rainure (21), qui est orientée essentiellement perpendiculairement à la zone d'entrée (12) du canal d'air (11),
la structure de collecte (20) étant formée dans un revêtement de sol (101) du véhicule et/ou la structure de collecte (20) étant intégrée dans une plaque de sol (102) du véhicule.

2. Système d'aération (100) selon la revendication précédente,
**caractérisé en ce que**
la rainure (21) comprend une contre-dépouille (S), afin d'empêcher que des particules de salissure (N) ne sautent hors de la structure de collecte (20).

3. Système d'aération (100) selon l'une quelconque des revendications précédentes,
**caractérisé en ce que**
la rainure (21) présente une profondeur de capture (T), afin de favoriser une capture de particules de salissure (N) à l'intérieur de la structure de collecte (20) .

4. Système d'aération (100) selon l'une quelconque des revendications précédentes,
**caractérisé en ce que**
un mat d'insertion (22) est prévu, qui forme un écran au moins partiel (K) pour la structure de collecte (20) depuis le côté de la zone de plancher du véhicule, afin d'empêcher des particules de salissure (N) de s'échapper sur le plancher du véhicule.

5. Système d'aération (100) selon l'une quelconque des revendications précédentes,
**caractérisé en ce que**
la structure de collecte (20) comprend au moins une nervure (23) sur la zone d'entrée (12) du canal d'air (11), qui pénètre au moins en partie dans la zone d'entrée (12) du canal d'air (11), afin de provoquer un rebond de particules de salissure (N) à distance du canal d'air (11).
